# EUROPEAN PATENT APPLICATION

(11) **EP 4 657 197 A1**
(43) Date of publication of application: **03.12.2025**
(21) Application number: 25170944.0
(22) Date of filing: 16.04.2025
(51) Int. Cl.: G05D 1/697, G05D 1/698, G05D 105/15, G05D 105/45, G05D 107/20, G05D 109/10

(54) **GUIDANCE INFORMATION FOR A SUPPORT VEHICLE TO AN AGRICULTURAL VEHICLE**

(30) Priority: 30.05.2024 US 202463653580 P
(71) Applicant: Agco Corporation, Duluth, Georgia 30096 (US)
(72) Inventor: BEER, Benjamin Michael, Jackson, 56143 (US)
(74) Representative: AGCO Intellectual Property Department

(57) **Abstract**

A mechanism for generating guidance information for a supply vehicle to an agricultural vehicle. An orientation of the agricultural vehicle is determined and used to produce guidance information. The guidance information is then passed to the supply vehicle.

## Description

### FIELD

Embodiments of the present disclosure relate generally to agriculture, and in particular to support vehicles for agricultural vehicles.

### BACKGROUND

In the agricultural industry, there are a wide variety of agricultural vehicles that are able to co-operate with one or more support vehicles in performing agricultural tasks. More particularly, a support vehicle is designed to interact with the agricultural vehicle to aid the agricultural vehicle in performing a task, e.g., filling or extracting material/fluid from a storage chamber of the agricultural vehicle. It will be appreciated that the interaction between the support vehicle and the agricultural vehicle is a physical task, e.g., unloading or refilling the storage chamber.

For instance, a combine harvester is able to discharge collected grain or crop into a trailer or other storage tank of a support vehicle. As another example, a tanker vehicle (an example of a support vehicle) may be able to refill a fluid reservoir of a crop sprayer. As yet another example, a planter may comprise a fertilizer reservoir, and a support vehicle may be able to refill the fertilizer reservoir.

There is a desire to improve the guidance of a support vehicle to an agricultural vehicle, to minimize at least a risk of damaging crop and/or the agricultural vehicle through inappropriate movement of the support vehicle.

### BRIEF SUMMARY

According to examples in accordance with this disclosure, there is provided a computer-implemented method for providing guidance information to a support vehicle for an agricultural vehicle.

The computer-implemented method, comprises: determining an orientation of the agricultural vehicle; and producing guidance information, responsive to the determined orientation of the agricultural vehicle, for the support vehicle, wherein the support vehicle is configured to interact with the agricultural vehicle; and providing the guidance information to the support vehicle.

The present disclosure recognizes that it is advantageous to provide guidance information to a support vehicle to aid in the navigation towards an agricultural vehicle (which it supports). In particular, it has been identified that the orientation of the agricultural vehicle provides valuable information about a best path and or approach strategy for a support vehicle, e.g., so that it is able to arrive at a desired position of the agricultural vehicle (e.g., a desired side or towards the front or rear). This can significantly reduce wasted resource (e.g., fuel or other energy sources) in appropriately aligning with the agricultural vehicle.

Embodiments thereby provide techniques that facilitate improved generation of guidance information for the support vehicle, which takes account of at least the orientation of the agricultural vehicle.

Determining the orientation of the agricultural vehicle may comprise tracking the position of the agricultural vehicle over time. Alternative approaches to determining the orientation of an agricultural vehicle are known, such as those that employ magnetic field sensors to identify the relative orientation with respect to a magnetic pole (e.g., by detecting one or more geomagnetic field(s)).

The step of producing guidance information may be performed by a remote processing system, remote from the agricultural vehicle.

In some examples, producing guidance information comprises determining a recommended orientation for the support vehicle responsive to the determined orientation of the agricultural vehicle. This provides valuable information for the (operator of the) support vehicle for improved positioning of the support vehicle. This provides useful technical information for aiding the operation of the support vehicle to perform in a most efficient manner.

In some examples, the agricultural vehicle comprises a first interaction zone, being a region of the agricultural vehicle with which the support vehicle is configured to interact; and the determining the recommended orientation for the support vehicle may comprise: obtaining first zonal information that indicates a relative position of the first interaction zone with respect to the orientation of the agricultural vehicle; and determining the recommended orientation comprises processing at least the determined orientation of the agricultural vehicle and the first zonal information to determine the recommended orientation.

In this way, a recommended orientation for aligning with a first interaction zone of the agricultural vehicle can be identified. This similarly provides valuable technical information to (an operator of) the support vehicle to determine how best to align the support vehicle for interaction with the first interaction zone.

In some examples, the support vehicle comprises a second interaction zone of the support vehicle, wherein the second interaction zone is a region of the support vehicle capable of interacting with the first interaction zone; the determining the recommended orientation for the support vehicle comprises: obtaining second zonal information that indicates a relative position of the second interaction zone with respect to an orientation of the support vehicle; and determining the recommended orientation comprises processing at least the first zonal information and the second zonal information to identify a recommended orientation for the support vehicle at which the first interaction zone aligns with the second interaction zone such that, if the support vehicle is proximate to the first interaction zone, the second interaction zone is able to interact with the first interaction zone.

This approach advantageously provides a mechanism by which an orientation of the support vehicle is identified that aligns the first and second interaction zones with respect to one another. This provides (the operator of) the support vehicle with valuable information for managing a technical task of moving the support vehicle to a position at which it is able to perform a desired interaction with the agricultural vehicle. In particular, this provides information on an angle or orientation at which the support vehicle should be positioned to perform an iterative support task with respect to the agricultural vehicle.

In some examples, the first interaction zone is a region via which the support vehicle is able to modify an amount of material or fluid carried by a storage chamber of the agricultural vehicle.

In a working example, the agricultural vehicle is a field sprayer; the storage chamber of the agricultural vehicle holds fluid for spraying by the agricultural vehicle; and the first interaction zone of the agricultural vehicle comprises an inlet for refilling the storage chamber of the agricultural vehicle.

Embodiments are particularly advantageous when used for field sprayers, as field sprayers benefit from on-the-fly restocking or refilling of fluid for spraying. Stoppage of a field sprayer during a spraying operation can lead to variation in crop and/or environmental conditions during spraying, leading to variation of treatment of crop. By maintaining the operation or functioning of the field sprayer, this risk is reduced.

In some examples, the method further comprises determining a position of the agricultural vehicle, wherein the guidance information is further responsive to the determined position of the agricultural vehicle.

The position of the agricultural vehicle is also useful for appropriate guiding of the support vehicle to the agricultural vehicle. By making use of the determined information in producing the guidance information, more relevant information can be provided to the support vehicle.

In some examples, the agricultural vehicle comprises a first interaction zone, being a region of the agricultural vehicle with which the support vehicle is configured to interact; the step of producing guidance information comprises identifying a position of the first interaction zone of the agricultural vehicle by processing the determined position and the determined orientation; and the guidance information is responsive to the identified position of the first interaction zone.

In some examples, the step of identifying a position of the first interaction zone of the agricultural vehicle comprises: obtaining identifying information of the agricultural vehicle that indicates a position of the first interaction zone with respect to the position of the agricultural device and the orientation of the agricultural device; and processing the identifying information, the determined position and the determined orientation to identify the position of the first interaction zone.

This approach recognizes that the position of the first interaction zone (e.g., within a spatial co-ordinate system) depends upon the position and orientation of the agricultural vehicle.

In some examples, the support vehicle comprises a second interaction zone of the support vehicle, wherein the second interaction zone is a region of the support vehicle capable of interacting with the first interaction zone.

The producing guidance information may comprise obtaining third zonal information that indicates a relative position of the second interaction zone with respect to a position of the support vehicle; and determining a recommended position for the support vehicle by processing at least the identified position of the first interaction zone and the third zonal information to identify a recommended position for the support vehicle at which the first interaction zone aligns with the second interaction zone such that the second interaction zone is able to interact with the first interaction zone.

The computer-implemented method may further comprise determining a position of the support vehicle, wherein the guidance information is further responsive to the determined position of the support vehicle.

This can provide an active guidance system for actively guiding the support vehicle.

In some examples, the producing guidance information comprises determining a recommended route for the support vehicle to move from the determined position to the recommended position. This approach effectively provides a navigation system that is able to measure the user's position and, on the basis of these measurements, produce information that facilitates the (manually controlled or autonomously controlled) technical task of moving a vehicle to a desired destination

In some examples, where a recommended orientation is produced, the recommended route is for the support vehicle to move from the determined position to the recommended position at the recommended orientation.

There is also provided a computer program product comprising computer program code means which, when executed on a computing device having a processing system, cause the processing system to perform all of the steps of any herein disclosed computer-implemented method.

There is also provided a processing system for providing guidance information to a support vehicle for an agricultural vehicle. The processing system is configured to determine an orientation of the agricultural vehicle; produce guidance information, responsive to the determined orientation of the agricultural vehicle, for the support vehicle, wherein the support vehicle is configured to interact with the agricultural vehicle; and provide the guidance information to the support vehicle.

The processing system may be appropriately adapted to carry out the steps of any herein proposed method.

### BRIEF DESCRIPTION OF THE DRAWINGS

One or more embodiments of the disclosure will now be described, by way of example only, with reference to the accompanying drawings, in which:
FIG. 1 illustrates an agricultural environment;
FIG. 2 illustrates a proposed method;
FIG. 3 illustrates a step for use in a proposed method;
FIG. 4 illustrates a variant method; and
FIG. 5 illustrates another variant method.

### DETAILED DESCRIPTION

Embodiments will now be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a mechanism for generating guidance information for a supply vehicle to an agricultural vehicle. An orientation of the agricultural vehicle is determined and used to produce guidance information. The guidance information is then passed to the supply vehicle.

In the context of the present disclosure, unless specific reference is made to another element, the orientation of an element may be considered to refer to an absolute orientation within a predefined spatial co-ordinate system.

Similarly, in the context of the present disclosure, unless specific reference is made to another element, the position of an element may be considered to refer to an absolute position within a predefined spatial co-ordinate system.

The predefined spatial co-ordinate system may, for instance, be a global co-ordinate system (such as those employed for satellite navigation systems) or a region/local co-ordinate system (e.g., a trilatered/triangulated position). Other example approaches are well known to the appropriately skilled person.

In the context of the present disclosure, the terms position and location are considered to be semantically identical, and can be used interchangeable with one another.

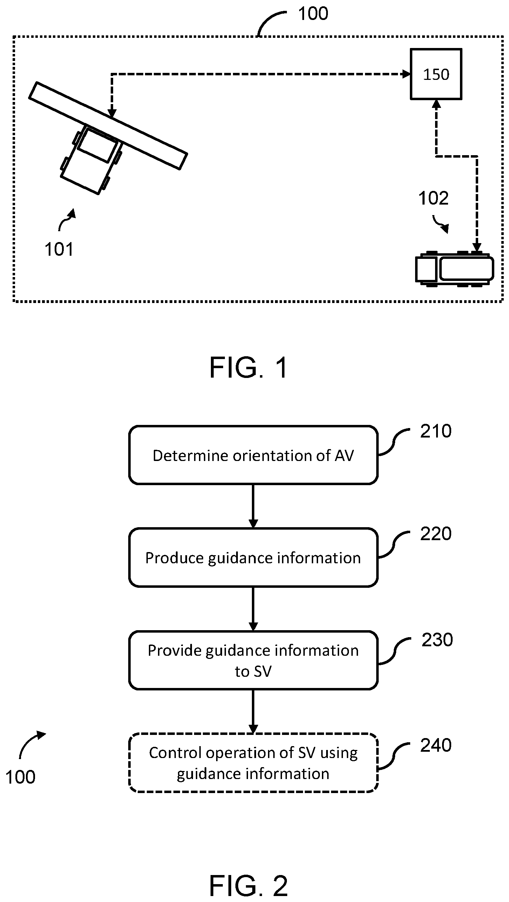

FIG. 1 illustrates an agricultural environment 100 in which proposed embodiments can be employed, for the purposes of improved contextual understanding.

In an agricultural environment 100, there are a wide variety of types of agricultural vehicles 101 that co-operate with one or more support vehicles 102 to perform an agricultural task. In particular, the support vehicle 102 may be configured to refill and/or extract material from a storage chamber of the agricultural vehicle, to allow the agricultural vehicle to continue performing an agricultural task without stopping or returning to a base - saving time and energy resource on performing the agricultural task and reducing a risk of damage to the agricultural vehicle (e.g., by traversing over unsuitable terrain).

In the illustrated example, the agricultural environment 100 comprises, as an agricultural vehicle 101, a crop sprayer and, as a support vehicle, a tanker 102 carrying fluid for refilling the crop sprayer. However, other variants will be readily apparent to the skilled person. For instance, the support vehicle may instead comprise a lead vehicle having a trailed tanker attached thereto.

In some examples, the agricultural vehicle(s) 101 and the support vehicle(s) 102 may be able to communicate with one another, i.e., be communicatively connected to one another.

In the agricultural environment 100, the agricultural vehicle(s) 101 and the support vehicle(s) 102 may be communicatively connected to a remote processing system 150, e.g., a cloud-based system and/or a coordinating system. The remote processing system may be designed or configured to co-ordinate the operation of the vehicles 101, 102. For instance, the remote processing system may co-ordinate the transfer of information between the vehicles and/or process information transmitted by one of the vehicles and transmit the processed information to another of the vehicles.

In a particular example, the agricultural vehicle 101 may provide, to the remote processing system 150 a first indicator that a support vehicle is required or desired (e.g., for refilling or emptying of a storage chamber). This first indicator may take the form of a (direct) request for support or a simple indicator of one or more values of one or more parameters of the agricultural vehicle, which is/are processed by the remote processing system to determine whether or not the support vehicle is required. The remote processing system 150 may correspondingly provide an indicator to the support vehicle that it should move to support the agricultural vehicle 101 in response to this first indicator.

Suitable (wireless) communication protocols that may be used for communications between the vehicle(s) and the remote processing system include any telecommunication protocol (e.g., 3G, 4G, 5G and so on) and/or radio communication protocols, such as LoRa or the IEEE 802.11ah standard.

Further optional functions of the remote processing system are well known in the art. For instance, the remote processing system may receive update information from the agricultural vehicle(s) and/or support vehicle(s), e.g., indicating operating parameters such as fuel level, operational capacity and so on. As another example, the remote processing system 150 may be configured to push information to the vehicle(s) 101, 102 - e.g., software updates, weather information and so on.

The remote processing system may be manually operated (e.g., an operator may control and review communications) or automated (e.g., without requiring operator input).

An automated remote processing system may be configured to compare received information (from the agricultural vehicle) to one or more thresholds and perform actions responsive thereto (e.g., alert the support vehicle).

As another example, the automated remote processing may be configured to process received (update) information using an appropriately trained machine-learning model to determine whether or not the support vehicle should move to the agricultural vehicle.

It will be appreciated that, in practice, there may be a plurality of different support vehicles with different functions or capabilities. The remote processing system may be configured to control to which support vehicle a request or indicator (for support) is sent based on the needed functionality or capability of the support vehicle(s).

The present disclosure recognizes that it would be advantageous to provide guidance information for an operator of the support vehicle 102 to increase an ease of maneuvering the support vehicle to an appropriate position with respect to the agricultural vehicle.

More particularly, the present disclosure recognizes that the support vehicle 102 will typically only be able to perform a desired interaction with the agricultural vehicle 101 when positioned at a certain position with respect to the agricultural vehicle. For instance, a trailer for collecting harvested crop from a combine harvester will need to be positioned beneath or alongside the unloading auger of the combine harvester to successfully receive the grain.

It is further recognized that it would be desirable for the support vehicle 102 to avoid contact with certain elements or parts of the agricultural vehicle, e.g., spraying equipment of a crop sprayer or the header of a combine harvester.

It is herein proposed to produce guidance information responsive to a determined orientation of the agricultural vehicle. The orientation of the agricultural vehicle will indicate the position of desirable or undesirable parts of the agricultural vehicle.

This guidance information can thereby guide the support vehicle to an appropriate position with respect to the agricultural vehicle. In particular, knowledge of the orientation of the agricultural vehicle allows identification of the relative position of desirable or undesirable parts of an agricultural vehicle, e.g., which can influence the guidance information.

FIG. 2 is a flowchart illustrating a proposed computer-implemented method 200. The method 200 is designed for providing guidance information to a support vehicle for an agricultural vehicle.

The method 200 comprises a step 210 of determining an orientation of the agricultural vehicle.

Step 210 can be performed, for instance, using a dedicated orientation sensor of the agricultural vehicle (e.g., an IMU, an inclinometer, a magnetometer, an accelerometer and/or a gyroscope). Accordingly, in some examples, step 210 is performed by the agricultural vehicle itself.

As another example, step 210 may be performed, for instance, by tracking position information of the agricultural vehicle. Position information defines changes in position of the agricultural vehicle. It can be assumed that the agricultural vehicle will (generally) be moving in a forward direction. Accordingly, it is possible to predict an orientation of the agricultural vehicle based on the tracked position of (i.e., the path taken by) the agricultural vehicle, e.g., to assume that the agricultural vehicle is facing a direction extrapolated from a historical path taken by the agricultural vehicle. Approaches for generating position information are well known in the art, such as those that employ a satellite navigation system, localization systems (such as those employing a SLAM algorithm), and/or triangulation/trilateration based systems.

Other approaches and techniques for determining an orientation of an agricultural vehicle will be apparent to the appropriately skilled person, e.g., using aerial images or the like.

The method 200 also comprises a step 220 of producing guidance information, responsive to the determined orientation of the agricultural vehicle, for the support vehicle. As previously mentioned, the support vehicle is configured to interact with the agricultural vehicle.

In a very simple example, the guidance information simply comprises or contains the determined orientation of the agricultural vehicle. This provides useful information to an operator of the support vehicle for appropriate alignment of the support vehicle with respect to the agricultural vehicle.

As another example, step 220 may comprise determining a recommended orientation for the support vehicle responsive to the determined orientation of the agricultural vehicle. Thus, the guidance information may comprise the recommended orientation.

More complex examples are provided later in this disclosure.

The method 200 also comprises a step 230 of providing the guidance information to the support vehicle.

In a simple example, steps 210, 220 and 230 are performed by the agricultural vehicle. In particular, the agricultural vehicle may generate orientation information and transmit this orientation information (as guidance information) to the support vehicle. Thus, the agricultural vehicle and support vehicle may be communicatively connected to one another, e.g., over a wireless communication system such as those employing mobile/cellular telecommunication systems.

In other examples, at least steps 220 and 230 may be performed by a/the remote processing system, which is remote from the agricultural vehicle and the support vehicle. In some examples, step 210 is also performed remote from both the agricultural vehicle and the support vehicle (e.g., using position data generated by the agricultural vehicle).

In some examples, at least steps 220 and 230 are only performed responsive to an indicator that the agricultural vehicle desires support from the support vehicle. This indicator may, for instance, be determined responsive to a value of a parameter falling below some predetermined threshold (e.g., a fluid level falling below a predetermined threshold).

This approach avoids iteratively or continually updating the support vehicle when such information is not required, reducing an occupation of a communication channel to the support vehicle and being more resource efficient.

Thus, in some examples, the guidance information may be provided to the support vehicle alongside an indicator that the support vehicle is to support the agricultural vehicle. This provides the support vehicle with useful information for how to approach the agricultural vehicle to aid in supporting the agricultural vehicle.

The method 200 may further comprise a step 240 of controlling an operation of one or more components of the support vehicle responsive to the guidance information.

In a simple example, step 240 comprises providing, at an output user interface such as a display screen of the support vehicle, a user-perceptible representation (e.g., a visual representation) of the guidance information.

In another example, step 240 comprises controlling the steering of the support vehicles responsive to the guidance information.

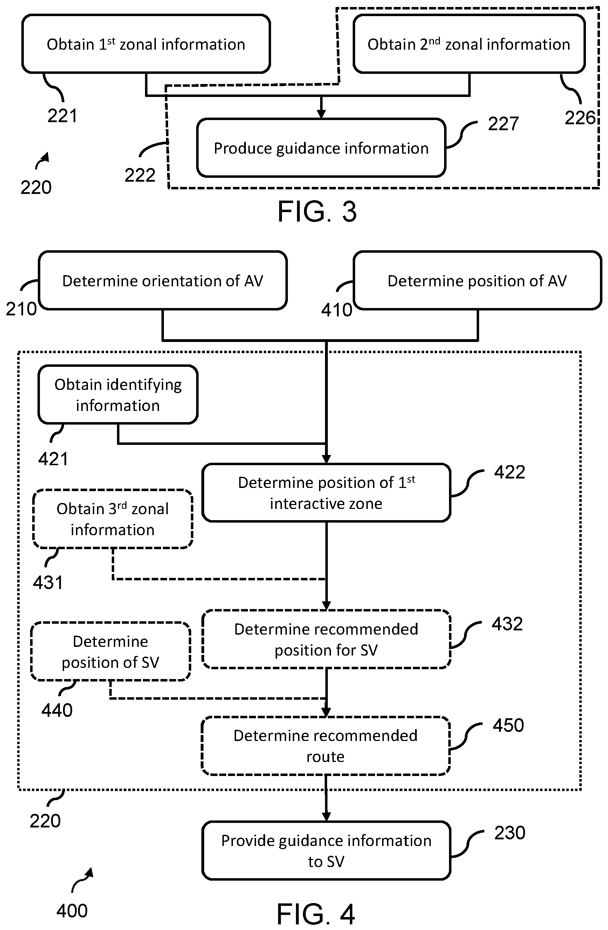

A more detailed example approach for performing step 220 is hereafter described with reference to FIG. 3, which provides a flowchart for an embodiment of step 220. In this approach, step 220 comprises determining a recommended orientation for the support vehicle responsive to the determined orientation of the agricultural vehicle.

For the purposes of this approach, the agricultural vehicle is considered to comprise a first interaction zone. The first interaction zone is a region of the agricultural vehicle with which the support vehicle is configured to interact.

In some examples, the first interaction zone is a region via which the support vehicle is able to modify an amount of material or fluid carried by a storage chamber of the agricultural vehicle.

In one working example, the agricultural vehicle is a field sprayer; the storage chamber of the agricultural vehicle holds fluid for spraying by the agricultural vehicle; and the first interaction zone of the agricultural vehicle comprises an inlet for refilling the storage chamber of the agricultural vehicle.

As another working example, the agricultural vehicle is a combine harvester; the storage chamber of the agricultural vehicle holds crop harvested by the combine harvester; and the first interaction zone of the agricultural vehicle comprises an outlet (e.g., of an unloading auger) for emptying the storage chamber of the agricultural vehicle.

Step 220 may comprise a sub-step 221 of obtaining first zonal information that indicates a relative position of the first interaction zone with respect to the orientation of the agricultural vehicle. The first zonal information may, for instance, be predetermined and stored in a database or dataset. In particular, the positional relationship between elements of an agricultural vehicle and the orientation of the vehicle is predetermined or known in advance.

Step 220 may also comprise a sub-step 222 processing the determined orientation and at least the first zonal information to determine the recommended orientation.

In a simple example, sub-step 222 comprises identifying an orientation for which a front of a support vehicle would align with the first interaction zone.

In a more complex example for performing sub-step 222, it is assumed that the support vehicle comprises a second interaction zone of the support vehicle. The second interaction zone is a region of the support vehicle capable of interacting with the first interaction zone.

As one working example, where the first interaction zone is an inlet for refilling a storage chamber of the agricultural vehicle, the second interaction zone may be an outlet or nozzle for outputting material for refilling the storage chamber of the agricultural vehicle.

As another working example, where the first interaction zone is an outlet for emptying the storage chamber of the agricultural vehicle, the second interaction zone may be an inlet for receiving material from the outlet, e.g., an opening of a trailer for receiving harvested crop from a combine harvester.

To perform this example of sub-step 222, the sub-step 222 may comprise a sub-step 226 of obtaining second zonal information that indicates a relative position of the second interaction zone with respect to an orientation of the support vehicle. The second zonal information, be predetermined and stored in a database or dataset. In particular, the positional relationship between elements of a support vehicle and the orientation of the vehicle is predetermined or known in advance.

The sub-step 222 may further comprise a sub-step 227 of processing at least the first zonal information and the second zonal information to identify a recommended orientation for the support vehicle at which the first interaction zone aligns with the second interaction zone such that, if the support vehicle is proximate to the first interaction zone, the second interaction zone is able to interact with the first interaction zone.

In this way, an operator or system is able to determine how the support vehicle should be orientated to provide a support functionality for the agricultural vehicle, e.g., to align an output of the support vehicle with an inlet for the agricultural vehicle. This provides useful information for alignment of the support vehicle and the agricultural vehicle in the agricultural environment.

In this way, sub-step 227 effectively determines and recommends an orientation for the support vehicle for aligning interaction zones of the two vehicles together.

FIG. 4 is a flowchart illustrating a variant computer-implemented method 400.

The method 400 comprises the step 210 of determining an orientation of the agricultural vehicle, approaches for which have been previously described.

The method 400 further comprises a step 410 of determining a position of the agricultural vehicle.

Approaches for determining a position of an agricultural vehicle are well known in the art, and typically track a first positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The method 400 comprises the step 220 of producing guidance information for the support vehicle. In this variant, the guidance information is responsive to the determined orientation and the determined position of the agricultural vehicle.

In one scenario, the agricultural vehicle comprises a first interaction zone, being a region of the agricultural vehicle with which the support vehicle is configured to interact. Examples have been previously disclosed.

In such scenarios, step 220 may comprise identifying a position of the first interaction zone of the agricultural vehicle by processing the determined position and the determined orientation.

This can be performed, for instance, by performing sub-steps 421 and 422.

Sub-step 421 comprises obtaining identifying information of the agricultural vehicle that indicates a position of the first interaction zone with respect to the position of the agricultural device and the orientation of the agricultural device.

The identifying information may, for instance, be predetermined and stored in a database or dataset. In particular, the positional relationship between elements of an agricultural vehicle and the position and orientation of the vehicle is predetermined or known in advance.

More particularly, the position of the first interaction zone relative to a positioning element of the agricultural vehicle, and with respect to an orientation of the agricultural vehicle may be predetermined. Thus, if the orientation of the vehicle is also known, then the position of the first interaction zone can be accurately determined or calculated.

Sub-step 422 comprises processing the identifying information, the determined position and the determined orientation to identify the position of the first interaction zone.

In a simple example, the guidance information may simply comprise the identified position of the first interaction zone. A more complex example is provided later.

The method 400 also comprises the step 230 of providing the guidance information to the support vehicle. Examples for performing step 230 have been previously provided.

Of course, the method 400 may further comprise a step (not illustrated) of controlling an operation of one or more components of the support vehicle responsive to the guidance information. Examples of this step have been previously described.

Further optional features and variants for the method 400 are hereafter described, with continued reference to FIG. 4.

In some examples the support vehicle comprises a second interaction zone of the support vehicle. As previously described, the second interaction zone is a region of the support vehicle capable of interacting with the first interaction zone.

In such examples, the step 220 of producing guidance information may comprise a sub-step 431 of obtaining third zonal information that indicates a relative position of the second interaction zone with respect to a position of the support vehicle.

The step 220 may further comprise a step 432 of determining a recommended position for the support vehicle by processing at least the identified position of the first interaction zone and the third zonal information to identify a recommended position for the support vehicle at which the first interaction zone aligns with the second interaction zone.

In this way, step 432 effectively determines a recommended position for the support vehicle at which the first and second interactions zones align with one another, e.g., are alongside one another or overlap (which may depend upon the type of interaction zones). For instance, if the first interaction zone is an inlet, and the second interaction zone is a nozzle, then the first and second interactions zones may preferably overlap.

In a further example, the method 400 may comprise a step 440 of determining a position of the support vehicle. The guidance information may be further responsive to the position of the support vehicle.

Approaches for determining a position of a support vehicle are well known in the art, and typically track a second positioning element of the support vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

In some examples, step 220 further comprises determining 450 a recommended route for the support vehicle to move from the determined position to the recommended position. The guidance information may therefore contain the determined recommended route for the support vehicle. This route can be defined in the same predefined co-ordinate system as the position of the support vehicle.

This can be readily achieved using any suitable routing algorithm, which are widely known in the art. In particular, there are a wide variety of techniques for recommending a path or route for a vehicle to move between two positions or positions, any of which can be employed to perform step 450.

Of course, step 450 may further make use of environmental information (e.g., indicating allowable routes or areas where a vehicle is permitted to move) in order to perform step 450. Thus, step 450 may comprise obtaining environmental information defining allowable regions or paths for movement of the support vehicle, and configuring the recommended path or route to lie only in the allowable regions and/or along the allowable paths.

It will, of course, be appreciated that steps 440 and 220 may be iteratively repeated to continually or repeatedly measure the position of the support vehicle to track progress along the recommended and (if necessary or if there is deviation from the recommended route) update the recommended route.

Thus, the method 400 may comprise monitoring a path taken by the support vehicle and updating a recommended path for the support vehicle responsive to the most recent position/position of the support vehicle.

In some examples, the method 400 comprises a step of determining a recommended orientation for the support vehicle. Approaches for performing this procedure have been previously described or mentioned with reference to FIG. 2.

In such approaches, the recommended route is for the support vehicle to move from the determined position to the recommended position at the recommended orientation. In this way, the support vehicle can be appropriately aligned or positioned with respect to the agricultural vehicle.

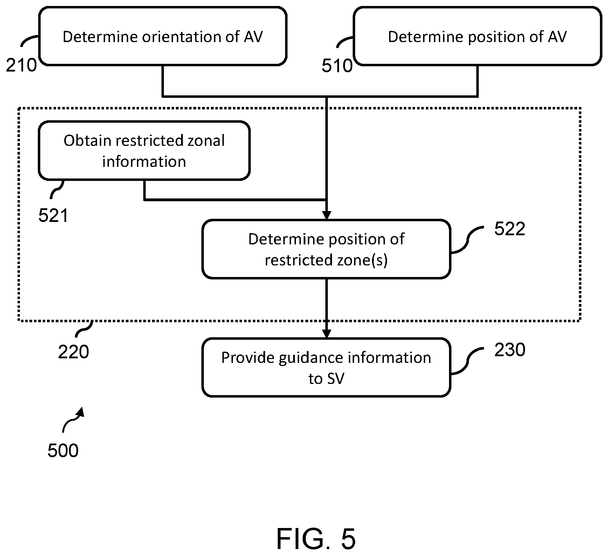

FIG. 5 is a flowchart illustrating a variant computer-implemented method 500.

The method 500 comprises the step 210 of determining an orientation of the agricultural vehicle, approaches for which have been previously described.

The method 500 further comprises a step 510 of determining a position of the agricultural vehicle. This may be similar/identical to the step 410 previously described with reference to FIG. 4.

Approaches for determining a position of an agricultural vehicle are well known in the art, and typically track a first positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The method 500 comprises the step 220 of producing guidance information for the support vehicle. In this variant, the guidance information is responsive to the determined orientation and the determined position of the agricultural vehicle.

In particular, the step 220 further comprises a step 521 of obtaining restricted zonal information that indicates a relative position of one or more restricted zones with respect to the orientation and/or position of the agricultural vehicle.

In this context, a restricted zone is a zone through which the support vehicle should not travel, e.g., for reasons of safety and/or avoiding damage to the agricultural vehicle. This may include a zone that bounds the exterior of the agricultural vehicle and/or a safety margin surrounding (one or more parts of) the agricultural vehicle. For instance, where the agricultural vehicle is a combine harvester, a restricted zone may include at least an area including the header together with a safety margin or region surrounding the header.

The step 220 further comprises a step 522 of processing the restricted zonal information, the determined position and the determined orientation to identify the position of the one or more restricted zones. This may employ a similar approach to the technique used to identify the position of the first interaction zone, as previously disclosed.

In a simple example, the guidance information produced by step 220 therefore comprises the identified position of the one or more restricted zones. This provides useful information for (an operator of the) support vehicle by identifying zones that should be avoided when travelling to the agricultural vehicle.

It will be appreciated that step 220 may comprise further sub-steps, e.g., employing any (sub-)step disclosed in previous embodiments or variations of step 220.

For instance, where a recommended route is generated, then the identified position(s) of the one or more restricted areas can be used in the generation of the recommended route, e.g., to configure the route to avoid the restricted area(s). In this way, steps 521 and 522 may be integrated into the method 400 illustrated by FIG. 4.

Previously described embodiments have described techniques for generating guidance information and providing the guidance information to the support vehicle. Any previously disclosed method and/or support vehicle may be correspondingly configured to make use of the guidance information to advantage.

By way of example, any previously disclosed method may comprise providing, at an output user interface such as a display screen of the support vehicle, a user-perceptible representation (e.g., a visual representation) of the guidance information. This provides an operator of the support vehicle with useful information for performing a technical process of maneuvering the position of the support vehicle to an appropriate position with respect to the agricultural vehicle.

As another example, any previously disclosed method may further comprise controlling a functionality of the support vehicle responsive to any recommendations in the guidance information.

Consider a scenario in which the support vehicle comprises an interactive element (e.g., representing the second interaction zone) that is able to controllably activate and deactivate to permit or prevent interaction with a corresponding interactive element of the agricultural vehicle. An example of an interactive element is a nozzle for refilling a storage chamber of the agricultural vehicle.

In such a scenario, and assuming the guidance information comprises a recommended orientation, any previously disclosed method may comprise activating the interactive only when an orientation of the support vehicle is within a predetermined margin of error of the recommended orientation.

Similarly, in such a scenario, and assuming the guidance information comprises a recommended position, any previously disclosed method may comprise activating the interactive element only when the support vehicle (or iterative element) is within a predetermined range of the recommended position.

These approaches can actively prevent or reduce a likelihood of an erroneous attempted interaction by the support vehicle, which may otherwise result in wasted material (e.g., fluid for a sprayer or fertilizer for a planter or unnecessary exposure of already harvested crop to the elements).

As yet another example, any previously disclosed method may comprise controlling a steering and driving of the support vehicle responsive to a recommended path in the guidance information. Thus, the support vehicle may perform autonomous driving to follow the recommended path in the guidance information. This provides a more accurate and reliable mechanism for positioning the support vehicle at an appropriate position with respect to the agricultural vehicle.

A wide variety of other advantageous mechanisms may be used to exploit the guidance information provided to the support vehicle.

The skilled person would be readily capable of developing a processing system for carrying out any herein described method. Thus, each step of the flow chart may represent a different action performed by a processing system, and may be performed by a respective module of the processing system.

The processing system may, for instance, be a remote processing system, e.g., a processing system remote from the agricultural vehicle and/or the support vehicle. In other examples, the processing system may be distributed, e.g., between the remote processing system and one or both of the agricultural vehicle and support vehicle.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

A computer program may be stored on a computer-readable medium, itself an embodiment of the disclosure. A "computer-readable medium" is any suitable mechanism or format that can store a program for later processing by a processing unit. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

The skilled person would be readily capable of configuring any herein disclosed method to perform the steps of any herein disclosed processing system (and vice versa).

All references cited herein are incorporated herein in their entireties. If there is a conflict between definitions herein and in an incorporated reference, the definition herein shall control.

## Claims

1. A computer-implemented method for providing guidance information to a support vehicle for an agricultural vehicle, the computer-implemented method comprising:
determining an orientation of the agricultural vehicle; and
producing guidance information, responsive to the determined orientation of the agricultural vehicle, for the support vehicle, wherein the support vehicle is configured to interact with the agricultural vehicle; and
providing the guidance information to the support vehicle.

2. The computer-implemented method of claim 1, wherein producing guidance information comprises determining a recommended orientation for the support vehicle responsive to the determined orientation of the agricultural vehicle.

3. The computer-implemented method of claim 2, wherein:
the agricultural vehicle comprises a first interaction zone, being a region of the agricultural vehicle with which the support vehicle is configured to interact;
the determining the recommended orientation for the support vehicle comprises:
obtaining first zonal information that indicates a relative position of the first interaction zone with respect to the orientation of the agricultural vehicle; and
determining the recommended orientation comprises processing at least determined orientation of the agricultural vehicle and the first zonal information to determine the recommended orientation.

4. The computer-implemented method of claim 3, wherein:
the support vehicle comprises a second interaction zone of the support vehicle, wherein the second interaction zone is a region of the support vehicle capable of interacting with the first interaction zone;
the determining the recommended orientation for the support vehicle comprises:
obtaining second zonal information that indicates a relative position of the second interaction zone with respect to an orientation of the support vehicle; and
determining the recommended orientation comprises processing at least the first zonal information and the second zonal information to identify a recommended orientation for the support vehicle at which the first interaction zone aligns with the second interaction zone such that, if the support vehicle is proximate to the first interaction zone, the second interaction zone is able to interact with the first interaction zone.

5. The computer-implemented method of any of claims 3 or 4, wherein the first interaction zone is a region via which the support vehicle is able to modify an amount of material or fluid carried by a storage chamber of the agricultural vehicle.

6. The computer-implemented method of claim 5, wherein:
the agricultural vehicle is a field sprayer;
the storage chamber of the agricultural vehicle holds fluid for spraying by the agricultural vehicle; and
the first interaction zone of the agricultural vehicle comprises an inlet for refilling the storage chamber of the agricultural vehicle.

7. The computer-implemented method of any of claims 1 to 6, further comprising determining a position of the agricultural vehicle, wherein the guidance information is further responsive to the determined position of the agricultural vehicle.

8. The computer-implemented method of claim 7, wherein:
the agricultural vehicle comprises a first interaction zone, being a region of the agricultural vehicle with which the support vehicle is configured to interact;
the step of producing guidance information comprises identifying a position of the first interaction zone of the agricultural vehicle by processing the determined position and the determined orientation; and
the guidance information is responsive to the identified position of the first interaction zone.

9. The computer-implemented method of claim 8, wherein the step of identifying a position of the first interaction zone of the agricultural vehicle comprises:
obtaining identifying information of the agricultural vehicle that indicates a position of the first interaction zone with respect to the position of the agricultural device and the orientation of the agricultural device; and
processing the identifying information, the determined position and the determined orientation to identify the position of the first interaction zone.

10. The computer-implemented method of any of claims 8 or 9, wherein:
the support vehicle comprises a second interaction zone of the support vehicle, wherein the second interaction zone is a region of the support vehicle capable of interacting with the first interaction zone;
the producing guidance information comprises:
obtaining third zonal information that indicates a relative position of the second interaction zone with respect to a position of the support vehicle; and
determining a recommended position for the support vehicle by processing at least the identified position of the first interaction zone and the third zonal information to identify a recommended position for the support vehicle at which the first interaction zone aligns with the second interaction zone such that the second interaction zone is able to interact with the first interaction zone.

11. The computer-implemented method of claim 10, further comprising determining a position of the support vehicle, wherein the guidance information is further responsive to the determined position of the support vehicle.

12. The computer-implemented method of claim 11, wherein the producing guidance information comprises determining a recommended route for the support vehicle to move from the determined position to the recommended position.

13. The computer-implemented method of claim 12, when dependent upon any of claims 3 or 4, wherein the recommended route is for the support vehicle to move from the determined position to the recommended position at the recommended orientation.

14. A computer program product comprising computer program code means which, when executed on a computing device having a processing system, cause the processing system to perform all of the steps of the computer-implemented method according to any one of claims 1 to 13.

15. A processing system for providing guidance information to a support vehicle for an agricultural vehicle, wherein the processing system is configured to:
determine an orientation of the agricultural vehicle; and
produce guidance information, responsive to the determined orientation of the agricultural vehicle, for the support vehicle, wherein the support vehicle is configured to interact with the agricultural vehicle; and
provide the guidance information to the support vehicle.
